# EUROPEAN PATENT SPECIFICATION

(11) **EP 2 001 765 B1**
(45) Date of publication and mention of the grant of the patent: **13.07.2011**
(21) Application number: 07734169.1
(22) Date of filing: 31.03.2007
(51) Int. Cl.: B65D 77/20, B65B 7/28, B65D 53/06, B29C 45/14

(54) **A METHOD FOR SEALING A PACKAGE AND A PACKAGE**
VERFAHREN ZUR ABDICHTUNG EINER VERPACKUNG UND VERPACKUNG
PROCÉDÉ DE SCELLEMENT D'UN EMBALLAGE ET EMBALLAGE

(30) Priority: 31.03.2006 FI 20060319
(43) Date of publication of application: 17.12.2008
(73) Proprietor: Stora Enso Oyj, 00160 Helsinki (FI)
(72) Inventor: MÄÄTTÄ, Päivi, 55100 Imatra (FI); VESANTO, Risto, 55800 Imatra (FI); PENTTINEN, Tapani, 49210 Huutjärvi (FI); VESANTO, Heli, 33720 Tampere (FI); JÄRVELÄ, Pentti, 15900 Lahti (FI); ELORAE, Marjo, 33720 Tampere (FI); HIETARANTA, Tapio, 01300 Vantaa (FI)
(74) Representative: Hakola, Unto Tapani
(86) International application number: PCT/IB2007/000848
(87) International publication number: WO 2007/113641

(56) References cited:
- EP-A1- 0 453 573
- EP-A2- 0 138 266
- FR-A- 1 359 203
- GB-A- 1 095 216
- JP-A- 2004 203 437
- US-A- 3 674 605
- US-A- 5 421 473
- US-A1- 2004 262 322

## Description

The invention relates to a method for sealing a package, in which a lid portion and a bottom portion are joined together by means of plastic material. The invention also relates to a package comprising a bottom portion and a lid portion joined to it by means of plastic material.

A method according to the preamble of claim 1 and a package according to the preamble of claim 6 is known from EP 0 453 573 A1.

Good sealing is required of food packages; that is, they must be impermeable to gas, moisture and, depending on the quality of the food, also grease; in other words, the package materials used for the package must have good barrier properties. The materials are often based on cardboard, comprising plastic or metal layers to enhance the barrier properties. Food-containing packages normally have a structure with a bottom portion containing the packed food and a lid portion joined to the bottom portion. Such a food package is normally a package to be sold in a retail shop and to be opened by the buyer when the food is used. The food can be either heated in the package, depending on the suitability of the package, or the food can be removed from it and be prepared separately to palatable condition. At some stage of using the food, the lid portion is removed from the bottom portion when the package is opened to access the food. It is very common to use heat-sealable plastic materials to join the lid portion to the bottom portion.

Examples of food packages and package materials used therein are mentioned, for example, in documents WO 03/033258, EP 1 289 856, WO 00/21854, and US 5 425 972.

It has been known for a long time that the joint between the bottom portion and the lid portion is the most critical point in the food package, because, on one hand, it must be tightly sealable and it must not impair the general barrier properties of the package, but on the other hand, the package should be relatively easy to open later on. Furthermore, the sealing of the package should be easily included in the industrial process of packaging the food. International publication WO 03/078012 discloses a package in which the bottom portion and the lid portion, which enclose a packed food, are joined by means of plastic material added to the rim of the bottom portion. The plastic material is added by injection moulding to the rim of the bottom portion, wherein the material can be utilized for attaching the lid by heat sealing or mechanically. Here, another function of the plastic material is to reinforce the rim of the package. Depending on the packaging process, however, material (splash etc.) from the substance to be packed may be left between the lid and the bottom portion, impairing the quality of the joint. Furthermore, in the case of heat sealing, the material of the lid and the plastic to be injection moulded at the rim of the bottom portion must be compatible with each other.

It is an aim of the invention to present a method for food packaging that provides very good sealing at said joint and that is applicable in an industrial food packaging process. Another aim of the invention is to present a package that has good impermeability also at the joint between the bottom portion and the lid portion and that does not put restrictions on the structure of the package materials. This aim is achieved by the method according to claim 1 and the package according to claim 6. The method can be implemented, for example, by suitable thermoplastics of food grade, and in practice, the moulding can be implemented, for example, by injection moulding.

Because the connection is made primarily or solely by means of moulded plastic material to join the portions together outside the joint (at the outer edge of the interface between the lower surface of the lid portion and the upper surface of the rim of the bottom portion that lie against each other), the materials in contact can be selected more freely, for example to optimize the barrier properties, and they do not necessarily need to be heat-sealable to each other.

The plastic material used for the sealing is selected according to the conditions of transportation, storage, sales and use of the package. Heat-resistance can be taken into account, if the closed package is intended to be heated, for example, in a microwave oven, or the requirements of storage temperatures can be considered, if the package is intended to be stored, for example, in frozen state. The plastic material may be a polymeric material suitable for injection moulding, for example some thermoplastic or thermoelastic. What is essential is that it can be moulded in liquid or flowing state onto the edges of the closed package, and solidified to a form that joins the lid portion and the bottom portion tightly together.

Compared with the method presented in WO 03/078012, the method of sealing by injection moulding according to the invention has the advantage that the process does not involve any extra moulding step. Both the injection moulding and the closing of the lid are performed at the same work stage. The bottom portions, such as trays or cups or other vessels intended for storing products, as well as the lids, can be manufactured as before. In fact, the variety of package materials used for them becomes wider, because heat-sealability is not a decisive factor.

In the following, the invention will be described in more detail with reference to the following drawings, in which
- Fig. 1: shows a closed package according to the invention in a cross-section,
- Fig. 2: shows another type of a closed package in a cross-section,
- Fig. 3: shows the joint between the lid portion and the bottom portion according to a first embodiment,
- Fig. 4: shows the joint between the lid portion and the bottom portion according to a second embodiment,

- Fig. 5: shows the joint between the lid portion and the bottom portion according to a third embodiment, and
- Fig. 6: shows schematically the steps of sealing the package according to the invention, and
- Fig. 7: shows schematically the steps of sealing according to an alternative embodiment.

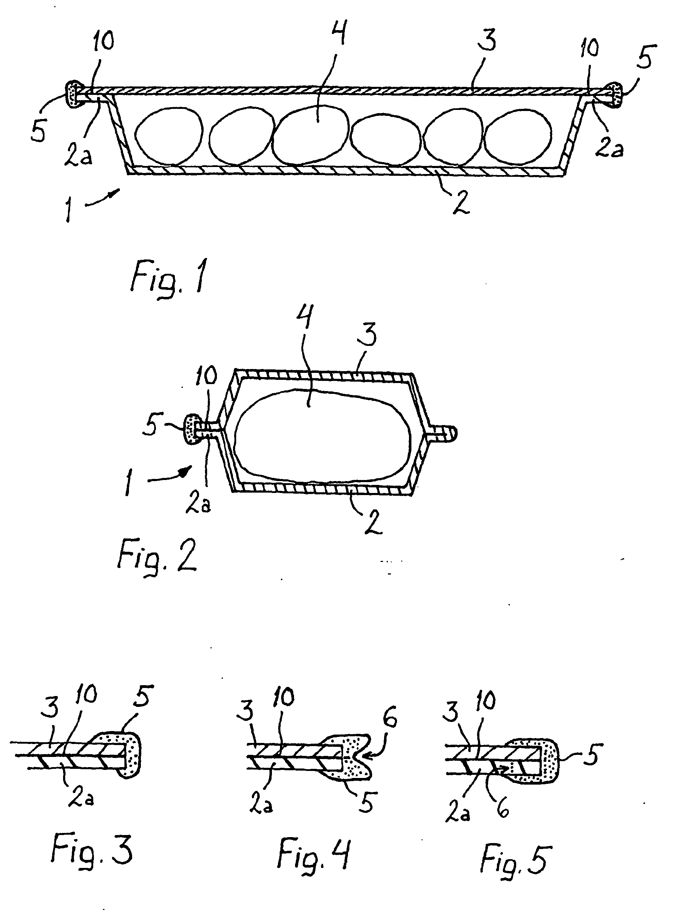

Figure 1 shows a food package 1 that has been closed tightly, which means impermeability to at least gas and water vapour. The general structure of the package is such that it comprises a bottom portion 2 forming the bottom of a container for food 4 packed in the package. This bottom portion comprises a bottom as well as side walls extending upwards from the bottom, their rims ending at a horizontal flange 2a encircling the edges of the bottom portion. Such a package is normally called a tray package. On top of the bottom portion 2, a lid portion 3 is placed, which in the case shown in Fig. 1 is a planar straight cover whose edges are placed on top of the flange 2a. The area in which the lower surface of the lid portion 3 and the upper surface of the flange 2a are against each other, is called a joint, and it is indicated with reference numeral 10.

In this context, food refers to any food intended to be consumed by people or animals.

The material of both the bottom portion 2 and the lid 3 may be cardboard or paper based material. When cardboard or paper based package material is used, it may be dispersion, sol gel or extrusion coated, or thermally coated, or coated by another suitable method, or totally uncoated. Coating materials may include polymeric materials or pigment based materials. In the package, also laser-markable materials can be used. The center of the lid portion 3 may be provided with a window made of a transparent material.

Particularly in paper or paperboard based package materials for food, the coating layers must act as barrier layers, to prevent, on one hand, the leaking out of substances from the food through the package material and, on the other hand, the entry of substances into the package from the outside. Such materials added on the outer and/or inner surface by any of the above-mentioned methods may be known barrier materials which may consist of polymer but also of metal.

It is .also possible that the bottom portion 2 and the lid portion 3 of the package 1 consist fully of plastic. The lid portion 3 may consist of, for example, transparent plastic.

In the material that forms the bottom portion 2 and the lid portion 3, it can also be taken into account that it is suitable for either a MAP package (Modified Atmosphere Packaging) or for treatment in an autoclave. In the package material, it is also possible to take into account the conditions of transportation, storage, sales and use (suitability for freezing and/or suitability for microwave oven, for example a so-called ovenable tray).

However, in the coatings of the package material, it is not necessary to take into account the sealability of the lid portion 3 and the bottom portion 2 together, thanks to the joining method which will be discussed further below. Consequently, the inner coatings of the lid portion 3 and the bottom portion 2 may be non-heat-sealable, and they may be selected in view of the functionality of the package, for example according to good barrier properties.

The bottom portion 2 and the lid portion 3 joined together enclose an air-tight inner compartment in which the food 4 is packed and which may also comprise a suitable gas composition, if it is a MAP package. The seam 10 formed by the lower surface of the lid portion 3 and the upper surface of the flange 2a encircling the bottom portion 2 is closed exteriorly by injection moulded plastic material 5 which encircles the whole package in the horizontal plane. Thus, the horizontal joint 10, which has previously formed a problem point in view of the sealing of the package, is at each side covered with plastic material 5 which prevents mass transfer from the inside out of the package and from the outside in through the joint 10. The plastic material covers fully both the outer edge of the bottom portion 2 (the flange 2a) and the outer edge of the lid portion 3, which do not have any protective layers but the paper or paperboard material is exposed. Thus, the plastic material 5 preferably extends also to the upper surface of the lid portion 3 and the lower surface of the flange 2a. Thus, the plastic material 5 can be fixed firmly at the joint, and it also has a stiffening effect. After the edge of the plastic material 5, the upper surface of the lid portion 3 extends bare towards the middle of the package. Similarly, on the lower side after the edge of the plastic material 5, the lower surface of the flange 2a extends bare towards the middle of the package. On the lower side of the flange 2a, the plastic material 5 ends before the side wall of the bottom portion 2.

Because the opposite surfaces of the lid portion 3 and the bottom portion 2 are joined by means of the plastic material 5 present at their edges, there is no need to use sealable polymeric materials on the actual surfaces. For example, the inner coatings of the paperboard or paper based bottom portion 2 and lid portion 3 can thus be selected more freely, or the package materials used in them may even be uncoated. In paperboard or paper based package materials, it is also possible to use coatings which are not heat-sealable to each other, for example coatings selected particularly on the basis of the barrier properties. Similarly, the opposite surfaces of the bottom portion 2 and the lid portion 3 do not need to be completely smooth, but for example the flange 2a encircling the bottom portion 2 may be allowed to have unevenness that is for example typical of tray packages due to their shaping. Furthermore, substances occasionally ended up between said surfaces, such as splashes possibly formed during packaging of the food 4, do not impair the tightness, because they do not affect the material joining the portions together which is now placed outside said surfaces in the form of plastic material 5 sealing the joint on the outside.

In other respects, the package 2 can be provided with normal printing on the bottom portion 2 and/or the lid portion 3.

The injection moulded plastic material may be suitable polymeric material, such as thermoplastic or thermoelastic. Examples of suitable polymers include polyolefins, polyesters and polyamides. The plastic material may also be modified in view of this use. It is also possible that the plastic material to be injection moulded is dyed in a suitable way to improve the appearance of the package. Furthermore, it is possible to use a plastic blend for the moulding, or to form the moulded rim encircling the package of two components by so-called multicomponent injection moulding.

Figure 2 shows another type of a package, in which the difference to the package of Fig. 1 is that while the lid 3 in the package of Fig. 1 continues in the direction of the plane of the flange 2a over the centre of the vessel-like bottom portion 2 of the package, the lid 3 in Fig. 2 is above the plane of the flange 2a at the centre of the bottom portion 2. In Fig. 2, both the bottom portion 2 and the lid portion 3 are vessel-like in the same way as the bottom portion 2 in Fig. 1, their flanges being placed against each other. Furthermore, the package is a so-called hinged package in which the bottom portion 2 and the lid portion 3 are integrated on one side; in other words, there is no joint extending to the outer edge in this section. Also here, the joint 10 extending to the outer edge is covered on the outside with plastic material 5 which, by injection moulding, forms a rim encircling the package at least along the length of the joint. At the hinge, the portions are integrated in each other, and the package is thus inherently closed, and consequently the plastic material rim is not necessarily needed in this section. The material options for both the package materials and the moulded plastic material are the same as above.

In Figs. 1 and 2, the joint 10 is straight and ends in the cut edges of blanks forming the lid 3 and the bottom portion 2. When the blanks are made of coated cardboard, the plastic material 5 thus forms also a shield for the so-called untrimmed edge.

Figures 3 to 5 show how the package 1 can be made easily openable in spite of the plastic material 5 tightly sealing the joint 10 between the lid portion 3 and the bottom portion 2. In Fig. 3, the plastic material 5 extends closer to the outer edge of the package on the side of the flange 2a of the bottom portion than above the lid portion 3. Thus, the joint can be broken by bending the joint upwards. Because the plastic material 5 has a smaller contact area with the flange 2a (the lower surface of the flange) than with the lid portion 3 (the upper surface of the lid portion), it can be easily detached from the flange 2a, and the lid can be opened. The plastic material 5 remains attached to the lid portion 3. Because the lid portion 3 and the bottom portion 2 are not glued to each other in the area of the joint 10, it is easy to open the lid once the seal formed by the plastic material 5 has been broken.

In Fig. 4, a weakening 6 has been made at the outer edge of the plastic material 5, approximately at the height of the joint 10 between the lid portion and the bottom portion. The weakening has here the shape of a recess extending towards the middle of the package. The cover can be opened at the recess in the plastic material by bending the upper half of the plastic material 5. If the rim formed by the plastic material 5 is moulded simultaneously from two directions by using the same plastic material, the flow fronts formed by different material inputs and emerging from opposite directions can be brought to join approximately at the height of the joint 10, wherein a kind of an interface is formed inside the material which produces a weakening (broken line) in the mechanical sense but does not impair the impermeability.

Figure 5 shows a structure which facilitates the opening, wherein the weakening 6 is not in the plastic material 5 which now extends equally far towards the middle of the package both above the lid portion 3 and below the flange 2a. The weakening is made in the package material itself, in this case in the flange 2a of the bottom portion 2, so that it extends around the package inside the edge of the plastic material 5. By bending the edge of the package upwards at the plastic material 5, the flange 2a is broken at the weakening, and the cover can be opened.

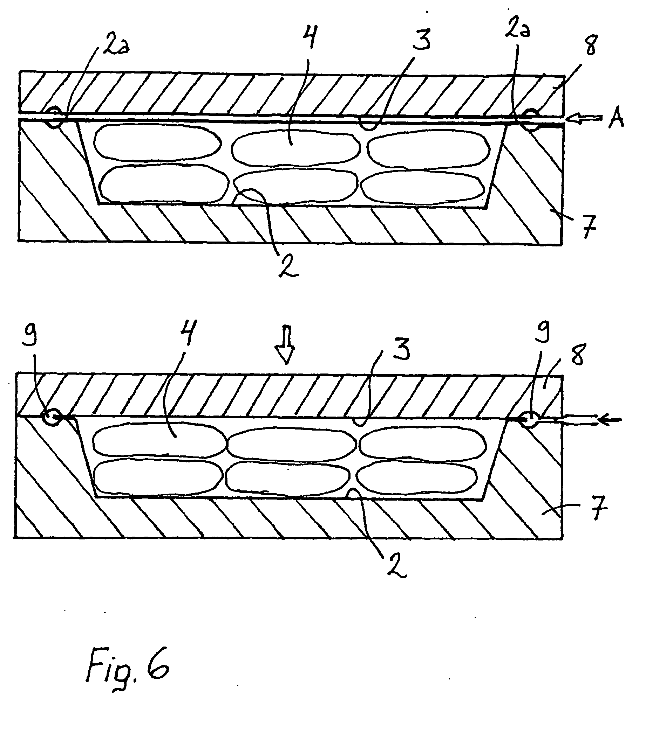

Figure 6 shows the steps of sealing the package in a schematic view. In the first step, the food 4 is placed in the bottom portion 2 of the package, and the bottom portion 2 and the lid portion 3 are separate, the first-mentioned in a lower mould half 7 and the latter held by an upper mould half 8. The lid portion may be sucked, for example by a vacuum, onto the lower surface of the upper mould half 8. At this stage, a protective gas or another gas composition suitable for the inside of the package can be blown from between the flange 2a and the lid portion 3 into the package so that it is flushed by the gas (arrow A). After this, the mould halves 7, 8 are brought together so that a mould cavity 9 is formed at the outer edge of the flange 2a of the bottom portion and the outer edge of the flange of the lid portion 3, encircling the package along the length of the joint 10 in the horizontal direction. This mould cavity determines the location and shape of the rim formed of the injection moulded material. The material is moulded by feeding molten or flowing polymer along feed channels extending through the upper mould half 8 into the mould cavity, and after the material has solidified, it forms the solid plastic material 5 sealing the joint 10 in the above-described manner.

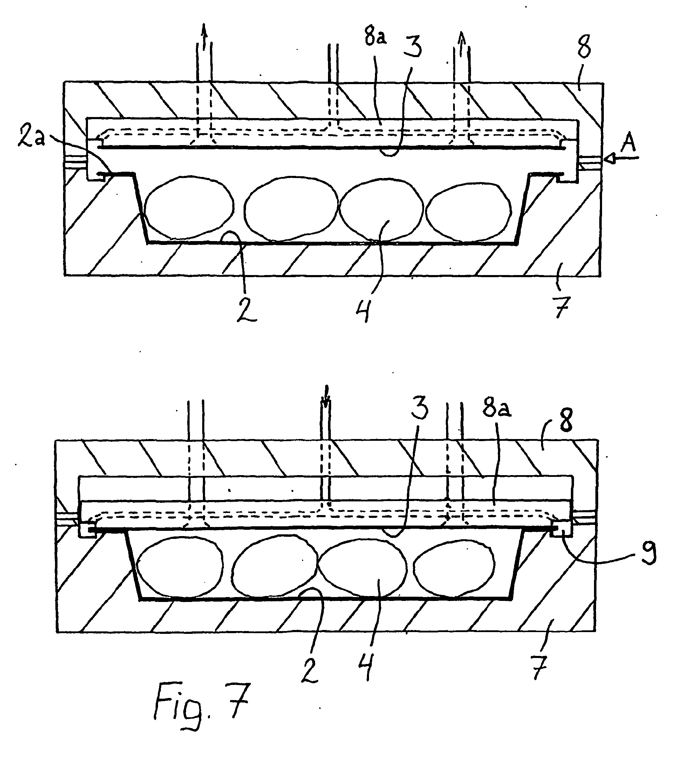

It is also possible to close the mould in such a way that the lid is not yet closed. Figure 7 shows an arrangement in which the mould comprises an inner piece 8a arranged to be movable in the closing direction and having vacuum channels for holding the lid 3 and feed channels for the material to be moulded. The upper mould half 8 also comprises separate suction and feed channels for the vacuum and for feeding the gas composition, respectively. In the first figure, an inner piece 8a is in the upper position, and a vacuum is formed in the mould by suction, after which the desired gas composition is fed by means of said channels. After this, the lid 3 is closed by pressing the inner piece 8a down, wherein it simultaneously covers the suction and feeding channels, and the rim is injection moulded as above.

Consequently, by the sealing method according to the invention, it is possible to secure that the gas composition (e.g. protective gas) fed into the package remains in the package, thanks to the hermetical sealing of the joint.

The steps shown in Figs. 6 and 7 can be easily integrated in the rest of the automated packaging process. The injection mould (mould halves) shown in Figs. 6 and 7 may be in a carousel-type device with several similar moulds, of which one at a time receives the package, and after going through different steps, delivers the sealed package for further processing.

The packages may also have other shapes than those in Figs. 1 and 2 above. The package may also be beaker-shaped, a package with a circular or quadrangular horizontal cross-section, in which the height to width ratio is greater than in tray packages; that is, a so-called cup.

The package materials of the bottom portion 2 and the lid portion 3 may also be based on different materials; for example, the bottom portion may be based on paper or paperboard and the lid portion may consist of plastic or metal foil; the bottom portion may consist of plastic and the lid portion may be based on paper or paperboard or metal foil; or the bottom portion may consist of metal foil and the lid portion may be based on paper or paperboard or of plastic. This is possible particularly because the sealing technique allows for more combinations for packaging foods, without affecting the impermeability. Also, it is insignificant if the food enclosed in the package is solid, liquid, dry, moisture-containing, etc.

Even though the sealing of food packages has been described above, the invention can also be used for the sealing of packages containing other products. Thus, the package material may also be selected more freely, for example wood or metal. Such products are not necessarily easily perishable, and they may be, for example, textiles, small iron goods, office supplies, or other products for wholesale or retail trade. In such packages, the sealing by injection moulding may be provided on most part of the outer edge of the lid and the bottom portion, and the part with no such sealing may be equipped with a structure facilitating the opening. In particular, the invention is suitable for the packaging of such flowing nonfood products which may leak out of the joint. Furthermore, the above-described sealing by injection moulding can be used for the package of such products which are not foods but which must not lose their moisture or other substances which may evaporate from the product into the environment.

## Claims

1. A method for sealing a package (1) containing a product (4), in which the lid portion (3) and the bottom portion (2) of the package are joined together by means of a plastic material (5), and in which method the bottom portion (2) and the lid portion (3) are joined together by moulding the plastic material (5) on both sides of a joint (10) between the bottom portion and the lid portion in such a way that the plastic material (5) covers the joint (10) exteriorly and joins the bottom portion (2) and the lid portion (3) together **characterized in that** a mechanical weakening (6) is formed in the plastic material (5) or in the flange (2a) of the bottom portion (2) to facilitate the opening of the package in any of the following ways:
- the plastic material (5) is moulded such that it extends closer to the outer edge of the package on the side of the flange (2a) of the bottom portion (2) than above the lid portion (3),
- the plastic material (5) is moulded such that a recess extending towards the middle of the package at the outer edge of the plastic material (5), approximately at the height of the joint (10) between the lid portion (3) and the bottom portion (2) is formed,
- the weakening (6) is formed in the flange (2a) of the bottom portion (2), inside the edge of the plastic material (5).

2. The method according to claim 1, **characterized in that** the plastic material (5) is moulded in such a way that it encircles the edge of the bottom portion (2) and the lid portion (3), extending onto the upper surface of the package material of the lid portion (3) and onto the lower surface of the package material of the bottom portion (2).

3. The method according to claim 1 or 2, **characterized in that** the plastic material (5) is thermoplastic or thermoelastic.

4. The method according to any of the preceding claims, **characterized in that** the moulding is performed in such a way that a mechanical weakening (6) is formed in the plastic material (5) to facilitate the opening of the package, for example a recess, an internal interface formed by different flow fronts, or unequal contact areas of the plastic material with the lid portion (3) and the bottom portion (2); or in such a way that a weakening (6) made in the package matrial of the bottom portion close to its outer edge remains inside the moulded plastic material (5).

5. The method according to any of the preceding claims, **characterized in that** the method comprises the following steps:
- placing the product (4) in the bottom portion (2),
- placing the bottom portion (2) and the lid portion (3) in an injection mould,
- feeding possible gas from between the lid portion (3) and the bottom portion (2),
- closing the injection mould in such a way that the lid portion (3) and the bottom portion (2) come against each other,
- moulding the plastic material (5) at the outer edge of the bottom portion (2) and the lid portion (3),
- opening the injection mould, and
- removing the sealed package (1) from the injection mould.

6. The method according to any of the preceding claims, **characterized in that** it is used for sealing a package (1) that contains food.

7. A package comprising a bottom portion (2) and a lid portion (3) connected to it by means of a plastic material, and a product (4) packed in an inner space defined by them, and in which package the bottom portion (2) and the lid portion (3) are joined together by means of plastic material (5) moulded on both sides of a joint (10) between the bottom portion and the lid portion, covering exteriorly the joint (10) and joining the bottom portion (2) and the lid portion (3) together **characterized in that** the plastic material (5) or the edge flange (2a) of
the bottom portion (2) comprises a mechanical weakening (6) to facilitate the opening of the package, which weakening (6) has been realized in any of the following ways:
- the plastic material (5) extends closer to the outer edge of the package on the side of the flange (2a) of the bottom portion (2) than above the lid portion (3),
- weakening (6) is a recess extending towards the middle of the package at the outer edge of the plastic material (5), approximately at the height of the joint (10) between the lid portion (3) and the bottom portion (2), or
- weakening (6) is a weakening being formed in the flange (2a) of the bottom portion (2), inside the edge of the plastic material (5).

8. The package according to claim 7, **characterized in that** the plastic material (5) encircles the edge of the bottom portion (2) and the lid portion (3), extending onto the upper surface of the package material of the lid portion (3) and onto the lower surface of the package material of the bottom portion (2).

9. The package according to claim 7 or 8, **characterized in that** the bottom portion comprises a bottom, side walls extending upwards from the bottom, and a flange (2a) adjoining the side walls, on top of which the lid portion (3) is placed.

10. The package according to any of the preceding claims 7 to 9, **characterized in that** the plastic material (5) is technical thermoplastic or thermoelastic.

11. The package according to any of the preceding claims 7 to 10, **characterized in that** the plastic material (5) encircles the outer edge of the package (1) along the whole length of the joint (10).

12. The package according to any of the preceding claims 7 to 11, **characterized in that** the joint (10) consists of the interface between the lid portion (3) and the bottom portion (2) placed against each other, where the opposite surfaces are separate from each other and joined by the plastic material (5) on the outside.

13. The package according to any of the preceding claims 7 to 12, **characterized in that** the package material forming the lid portion and the bottom portion is of the following groups:
- paper or paperboard based materials,
- plastics,
- metal foils,
wherein the materials of the lid portion and the bottom portion may belong to the same group or different groups.

14. The package according to any of the preceding claims 7 to 13. **characterized in that** the packed product (4) is food.

## Patentansprüche

1. Verfahren zum Verschließen einer Packung (1) enthaltend ein Produkt (4), wobei der Deckelabschnitt (3) und der Bodenabschnitt (2) der Packung mittels eines Kunststoffmaterials (5) miteinander verbunden werden und wobei in dem Verfahren der Bodenabschnitt (2) und der Deckelabschnitt (3) durch Anformen des Kunststoffmaterials (5) auf beiden Seiten einer Verbindungsstelle (10) zwischen dem Bodenabschnitt und dem Deckelabschnitt derart miteinander verbunden werden, dass das Kunststoffmaterial (5) die Verbindungsstelle (10) äußerlich abdeckt und den Bodenabschnitt (2) und den Deckelabschnitt (3) miteinander verbindet, **dadurch gekennzeichnet, dass** eine mechanische Schwächung (6) im Kunststoffmaterial (5) oder im Flansch (2a) des Bodenabschnitts (2) in irgendeiner der folgenden Arten ausgebildet wird, um das Öffnen der Packung zu erleichtern:
- das Kunststoffmaterial (5) wird derart geformt, dass es sich näher am Außenrand der Packung auf der Seite des Flansches (2a) des Bodenabschnitts (2) erstreckt als über dem Deckelabschnitt (3),
- das Kunststoffmaterial (5) wird derart geformt, dass eine Aussparung ausgebildet wird, die sich in Richtung der Mitte der Packung am Außenrand des Kunststoffmaterials (5) ungefähr in Höhe der Verbindungsstelle (10) zwischen dem Deckelabschnitt (3) und dem Bodenabschnitt (2) erstreckt,
- die Schwächung (6) wird im Flansch (2a) des Bodenabschnitts (2) innerhalb des Rands des Kunststoffmaterials (5) ausgebildet.

2. Verfahren nach Anspruch 1, **dadurch gekennzeichnet, dass** das Kunststoffmaterial (5) derart geformt wird, dass es den Rand des Bodenabschnitts (2) und des Deckelabschnitts (3) umgibt und sich auf die obere Oberfläche des Packungsmaterials des Deckelabschnitts (3) und auf die untere Oberfläche des Packungsmaterials des Bodenabschnitts (2) erstreckt.

3. Verfahren nach Anspruch 1 oder 2, **dadurch gekennzeichnet, dass** das Kunststoffmaterial (5) thermoplastisch oder thermoelastisch ist.

4. Verfahren nach irgendeinem der vorangehenden Ansprüche, **dadurch gekennzeichnet, dass** das Formen derart durchgeführt wird, dass eine mechanische Schwächung (6) im Kunststoffmaterial (5) ausgebildet wird, um das Öffnen der Packung zu erleichtern, beispielsweise eine Aussparung, eine durch verschiedene Fließfronten ausgebildete innere Verbindungsfläche oder ungleiche Kontaktbereiche des Kunststoffmaterials mit dem Deckelabschnitt (3) und dem Bodenabschnitt (2); oder derart, dass eine im Packungsmaterial des Bodenabschnitts nahe dessen Außenrand ausgebildete Schwächung (6) innerhalb des geformten Kunststoffmaterials (5) bleibt.

5. Verfahren nach irgendeinem der vorangehenden Ansprüche, **dadurch gekennzeichnet, dass** das Verfahren folgende Schritte umfasst:
- Anordnen des Produkts (4) im Bodenabschnitt (2),
- Anordnen des Bodenabschnitts (2) und des Deckelabschnitts (3) in einer Spritzgießform,
- Zuführen von etwaigem Gas zwischen dem Deckelabschnitt (3) und dem Bodenabschnitt (2),
- Schließen der Spritzgießform derart, dass der Deckelabschnitt (3) und der Bodenabschnitt (2) aneinander anliegen,
- Anformen des Kunststoffmaterials (5) am Außenrand des Bodenabschnitts (2) und des Deckelabschnitts (3),
- Öffnen der Spritzgießform, und
- Entfernen der verschlossenen Packung (1) aus der Spritzgießform.

6. Verfahren nach irgendeinem der vorangehenden Ansprüche, **dadurch gekennzeichnet, dass** es zum Verschließen einer Packung (1) verwendet wird, die ein Lebensmittel enthält.

7. Packung umfassend einen Bodenabschnitt (2) und einen mittels eines Kunststoffmaterials damit verbundenen Deckelabschnitt (3) sowie ein in einen durch selbige definierten Innenraum gepacktes Produkt (4), und wobei bei der Packung der Bodenabschnitt (2) und der Deckelabschnitt (3) mittels Kunststoffmaterial (5) miteinander verbunden sind, das auf beiden Seiten einer Verbindungsstelle (10) zwischen dem Bodenabschnitt und dem Deckelabschnitt angeformt ist, äußerlich die Verbindungsstelle (10) abdeckt und den Bodenabschnitt (2) und den Deckelabschnitt (3) miteinander verbindet, **dadurch gekennzeichnet, dass** das Kunststoffmaterial (5) oder der Randflansch (2a) des Bodenabschnitts (2) eine mechanische Schwächung (6) umfasst, um das Öffnen der Packung zu erleichtern, wobei die Schwächung (6) in irgendeiner der folgenden Arten ausgeführt wurde:
- das Kunststoffmaterial (5) erstreckt sich näher am Außenrand der Packung auf der Seite des Flansches (2a) des Bodenabschnitts (2) als über dem Deckelabschnitt (3),
- die Schwächung (6) ist eine Aussparung, die sich in Richtung der Mitte der Packung am Außenrand des Kunststoffmaterials (5) ungefähr in Höhe der Verbindungsstelle (10) zwischen dem Deckelabschnitt (3) und dem Bodenabschnitt (2) erstreckt, oder
- die Schwächung (6) ist eine Schwächung, die im Flansch (2a) des Bodenabschnitts (2) innerhalb des Rands des Kunststoffmaterials (5) ausgebildet ist.

8. Packung nach Anspruch 7, **dadurch gekennzeichnet, dass** das Kunststoffmaterial (5) den Rand des Bodenabschnitts (2) und des Deckelabschnitts (3) umgibt und sich auf die obere Oberfläche des Packungsmaterials des Deckelabschnitts (3) und auf die untere Oberfläche des Packungsmaterials des Bodenabschnitts (2) erstreckt.

9. Packung nach Anspruch 7 oder 8, **dadurch gekennzeichnet, dass** der Bodenabschnitt einen Boden, sich vom Boden aus nach oben erstreckende Seitenwände und einen an die Seitenwände angrenzenden Flansch (2a) umfasst, auf welchem oben der Deckelabschnitt (3) angeordnet ist.

10. Packung nach irgendeinem der vorangehenden Ansprüche 7 bis 9, **dadurch gekennzeichnet, dass** das Kunststoffmaterial (5) ein technisches thermoplastisches oder thermoelastisches Material ist.

11. Packung nach irgendeinem der vorangehenden Ansprüche 7 bis 10, **dadurch gekennzeichnet, dass** das Kunststoffmaterial (5) den Außenrand der Packung (1) entlang der gesamten Länge der Verbindungsstelle (10) umgibt.

12. Packung nach irgendeinem der vorangehenden Ansprüche 7 bis 11, **dadurch gekennzeichnet, dass** die Verbindungsstelle (10) aus der Verbindungsfläche zwischen dem aneinander angeordneten Deckelabschnitt (3) und Bodenabschnitt (2) besteht, wo die gegenüberliegenden Oberflächen voneinander getrennt sind und durch das Kunststoffmaterial (5) auf der Außenseite verbunden sind.

13. Packung nach irgendeinem der vorangehenden Ansprüche 7 bis 12, **dadurch gekennzeichnet, dass** das den Deckelabschnitt und den Bodenabschnitt bildende Packungsmaterial zu den folgenden Gruppen gehört:
- Materialien auf Basis von Papier oder Pappe,
- Kunststoffen,
- Metallfolien,
wobei die Materialien des Deckelabschnitts und des Bodenabschnitts zu derselben Gruppe oder verschiedenen Gruppen gehören können.

14. Packung nach irgendeinem der vorangehenden Ansprüche 7 bis 13, **dadurch gekennzeichnet, dass** das verpackte Produkt (4) ein Lebensmittel ist.

## Revendications

1. Procédé de scellage d'un emballage (1) contenant un produit (4), dans lequel la partie de couvercle (3) et la partie de fond (2) de l'emballage sont jointes ensemble au moyen d'un matériau plastique (5), et dans lequel procédé la partie de fond (2) et la partie de couvercle (3) sont jointes ensemble par moulage du matériau plastique (5) sur les deux côtés d'une jonction (10) entre la partie de fond et la partie de couvercle de telle manière que le matériau plastique (5) couvre la jonction (10) extérieurement et joint la partie de fond (2) et la partie de couvercle (3) ensemble, **caractérisé en ce qu'**un affaiblissement mécanique (6) est formé dans le matériau plastique (5) ou dans le rebord (2a) de la partie de fond (2) pour faciliter l'ouverture de l'emballage de l'une quelconque des manières suivantes :
- le matériau plastique (5) est moulé de telle manière qu'il s'étend plus près du bord extérieur de l'emballage sur le côté du rebord (2a) de la partie de fond (2) qu'au-dessus de la partie de couvercle (3),
- le matériau plastique (5) est moulé de telle manière qu'un renfoncement s'étendant vers le milieu de l'emballage au niveau du bord extérieur du matériau plastique (5), approximativement à la hauteur de la jonction (10) entre la partie de couvercle (3) et la partie de fond (2) est formé,
- l'affaiblissement (6) est formé dans le rebord (2a) de la partie de fond (2), à l'intérieur du bord du matériau plastique (5).

2. Procédé selon la revendication 1, **caractérisé en ce que** le matériau plastique (5) est moulé de telle manière qu'il encercle le bord de la partie de fond (2) et de la partie de couvercle (3), s'étendant sur la surface supérieure du matériau d'emballage de la partie de couvercle (3) et sur la surface inférieure du matériau d'emballage de la partie de fond (2).

3. Procédé selon la revendication 1 ou 2, **caractérisé en ce que** le matériau plastique (5) est thermoplastique ou thermoélastique.

4. Procédé selon l'une quelconque des revendications précédentes, **caractérisé en ce que** le moulage est effectué de telle manière qu'un affaiblissement mécanique (6) est formé dans le matériau plastique (5) pour faciliter l'ouverture de l'emballage, par exemple un renfoncement, une interface interne formée par différents fronts d'écoulement, ou des zones de contact inégales du matériau plastique avec la partie de couvercle (3) et la partie de fond (2) ; ou de telle manière qu'un affaiblissement (6) réalisé dans le matériau d'emballage de la partie de fond à proximité de son bord extérieur reste à l'intérieur du matériau plastique (5) moulé.

5. Procédé selon l'une quelconque des revendications précédentes, **caractérisé en ce que** le procédé comprend les étapes suivantes :
- mise en place du produit (4) dans la partie de fond (2),
- mise en place de la partie de fond (2) et de la partie de couvercle (3) dans un moule par injection,
- alimentation d'un gaz éventuel d'entre la partie de couvercle (3) et la partie de fond (2),
- fermeture du moule par injection de telle manière que la partie de couvercle (3) et la partie de fond (2) viennent l'une contre l'autre,
- moulage du matériau plastique (5) au niveau du bord extérieur de la partie de fond (2) et de la partie de couvercle (3),
- ouverture du moule par injection, et
- sortie de l'emballage (1) scellé du moule par injection.

6. Procédé selon l'une quelconque des revendications précédentes, **caractérisé en ce qu'**il est utilisé pour sceller un emballage (1) qui contient un aliment.

7. Emballage comprenant une partie de fond (2) et une partie de couvercle (3) connectée à celle-ci au moyen d'un matériau plastique, et un produit (4) emballé dans un espace intérieur défini par celles-ci, et dans lequel emballage la partie de fond (2) et la partie de couvercle (3) sont jointes ensemble au moyen d'un matériau plastique (5) moulé sur les deux côtés d'une jonction (10) entre la partie de fond et la partie de couvercle, couvrant extérieurement la jonction (10) et joignant la partie de fond (2) et la partie de couvercle (3) ensemble, **caractérisé en que** le matériau plastique (5) ou le rebord (2a) de la partie de fond (2) comprend un affaiblissement mécanique (6) pour faciliter l'ouverture de l'emballage, lequel affaiblissement (6) a été réalisé de l'une quelconque des manières suivantes :
- le matériau plastique (5) s'étend plus près du bord extérieur de l'emballage sur le côté du rebord (2a) de la partie de fond (2) qu'au-dessus de la partie de couvercle (3),
- l'affaiblissement (6) est un renfoncement s'étendant vers le milieu de l'emballage au niveau du bord extérieur du matériau plastique (5), approximativement à la hauteur de la jonction (10) entre la partie de couvercle (3) et la partie de fond (2), ou
- l'affaiblissement (6) est un affaiblissement étant formé dans le rebord (2a) de la partie de fond (2), à l'intérieur du bord du matériau plastique (5).

8. Emballage selon la revendication 7, **caractérisé en ce que** le matériau plastique (5) encercle le bord de la partie de fond (2) et de la partie de couvercle (3), s'étendant sur la surface supérieure du matériau d'emballage de la partie de couvercle (3) et sur la surface inférieure du matériau d'emballage de la partie de fond (2).

9. Emballage selon la revendication 7 ou 8, **caractérisé en ce que** la partie de fond comprend un fond, des parois latérales s'étendant vers le haut à partir du fond, et un rebord (2a) joignant les parois latérales, au-dessus desquelles la partie de couvercle (3) est placée.

10. Emballage selon l'une quelconque des revendications précédentes 7 à 9, **caractérisé en ce que** le matériau plastique (5) est un matériau technique thermoplastique ou thermoélastique.

11. Emballage selon l'une quelconque des revendications précédentes 7 à 10, **caractérisé en ce que** le matériau plastique (5) encercle le bord extérieur de l'emballage (1) sur la totalité de la longueur de la jonction (10).

12. Emballage selon l'une quelconque des revendications précédentes 7 à 11, **caractérisé en ce que** la jonction (10) consiste en l'interface entre la partie de couvercle (3) et la partie de fond (2) placées l'une contre l'autre, où les surfaces opposées sont séparées l'une de l'autre et jointes par le matériau plastique (5) sur l'extérieur.

13. Emballage selon l'une quelconque des revendications précédentes 7 à 12, **caractérisé en ce que** le matériau d'emballage formant la partie de couvercle et la partie de fond est parmi les groupes suivants :
- matériaux à base de papier ou de carton,
- plastiques,
- feuilles métalliques,
dans lequel les matériaux de la partie de couvercle et de la partie de fond peuvent appartenir au même groupe ou à des groupes différents.

14. Emballage selon l'une quelconque des revendications précédentes 7 à 13, **caractérisé en ce que** le produit (4) emballé est un aliment.
